# EUROPEAN PATENT APPLICATION

(11) **EP 3 085 630 A1**
(43) Date of publication of application: **26.10.2016**
(21) Application number: 16166452.9
(22) Date of filing: 21.04.2016
(51) Int. Cl.: B65C 11/02, B41J 3/407, B41J 11/00, B41J 15/04, G01G 19/414, B41J 31/00

(54) **PRINTING CARTRIDGE FOR WEIGHING-PRICING SCALES AND LABELLING MACHINE**

(30) Priority: 22.04.2015 IT BO20150204
(71) Applicant: One Code S.r.l., 60015 Falconara Marittima (Ancona) (IT)
(72) Inventor: ZUCCHINI, Andrea, 40138 BOLOGNA (IT); FRIZIERO, Enrico, 35010 BORGORICCIO (Padova) (IT)
(74) Representative: Bianciardi, Ezio

(57) **Abstract**

A printing cartridge, an automatic labelling machine comprising such a cartridge and a weighing-pricing scale comprising such an automatic labelling machine. The cartridge comprises a box-shaped body (6) defined by a first plate (7) for supporting at least a first pin (8) on which is mounted a first reel (9) of a ribbon (35) of printable paper, and by at least a second plate (10) which can be coupled to the first plate (7) so as to define, for the first reel (9), a container (11) having at least a first opening (12). The first plate (7) comprises a second support pin (31) of a second reel (29) of printing ribbon (28) and guide means (34) of the printing ribbon (28).

## Description

This invention relates to a printing cartridge for automatic labelling machines, or simply printers, so-called "linerless", for example of the type which can be used in weighing-pricing scales, and an automatic labelling machine comprising the printing cartridge.

The weighing-pricing scales are usually equipped with an incorporated single or multi ribbon printing system.

More specifically, this invention relates to a printing cartridge for scales used, for example, in supermarkets, ideal for self-service weighing, by entering the product code on the touch screen.

More specifically, the invention relates to an automatic labelling machine of weighing-pricing scales comprising a cartridge of the type described above.

The term "weighing-pricing" normally indicates scales of the type described above and equipped with an automatic labelling machine of the type which uses a continuous ribbon provided with adhesive or adhesive-coated and designed to cut the continuous ribbon into labels to be applied to products such as, for example, containers or packs of products previously selected and arranged directly by the purchaser.

Before or after the cutting, and in any case before dispensing of the label, the labelling machine prints on the label various information relative to the article selected and weighed, including naturally, the weight and the total price, but also, possibly the price per kg, nutritional information, ingredients, place of origin, the presence of allergens, etc.

The printing may be of a thermal type if thermal paper is used for the labels, or it may be printed by means of thermal transfer of the ink from a support ribbon.

In use, the scales described above, or in general automatic labelling machines, require the intervention of an operator every time the reel from which are cut the labels are cut is finished and/or each time the ribbon, if present, is finished.

The operation for changing materials usually requires several minutes since the operator must manually collect a new reel and must pass the ribbon between rollers, dancers, etc.

These steps are repeated if necessary for the ribbon, if present.

The operation for changing materials is relatively complex and delicate, and for this reason requires the intervention of quite skilled operators, who are not always immediately available. A delayed intervention by the operators may result in machine stoppages which are more or less lengthy, with negative consequences from the economic point of view.

In this context, the technical purpose which forms the basis of this invention is to propose a printing cartridge for weighing-pricing scales equipped with an incorporated multi-ribbon printing system which overcomes the above-mentioned disadvantages of the prior art.

More specifically, the aim of this invention is to provide a printing cartridge for automatic labelling machines for weighing-pricing scales equipped with an incorporated multi-ribbon printing system which offers a high level of reliability and, more specifically, which requires low maintenance and is not subject to frequent machine stoppages for servicing the printing unit.

A further aim of this invention is to provide an automatic labelling machine, comprising a cartridge of the type described above.

The technical purpose indicated and the aim specified are substantially achieved by a printing cartridge for weighing-pricing scales equipped with an incorporated multi-ribbon printing system and by an automatic labelling machine for weighing-pricing scales equipped with an incorporated multi-ribbon printing system with the technical features described in one or more of the appended claims.

Further features and advantages of the present invention are more apparent from the non-limiting description which follows of a preferred, non-limiting embodiment of a printing cartridge for automatic labelling machines for example for weighing-pricing scales equipped with an incorporated multi-ribbon printing system as illustrated in the accompanying drawings, in which:
- Figure 1 shows a weighing-pricing scales comprising an automatic labelling machine equipped with a cartridge made according to this invention;
- Figure 2 is a perspective view. with some parts cut away for clarity, of an automatic labelling machine equipped with a printing cartridge made according to this invention;
- Figure 3 shows a schematic perspective view of a printing cartridge according to this invention;
- Figure 4 is a schematic plan view, with some parts cut away for better clarity, of a printing cartridge according to this invention in a first operating configuration;
- Figure 5 is a schematic plan view, with some parts cut away for better clarity, of a printing cartridge according to this invention in a second operating configuration;
- Figure 6 shows a schematic perspective view of a detail of a printing cartridge according to this invention;
- Figure 7 shows a schematic view, with some parts cut away for better clarity, of the printing cartridge of Figure 5;
- Figure 8 shows a schematic perspective view of a second detail of a printing cartridge according to this invention;

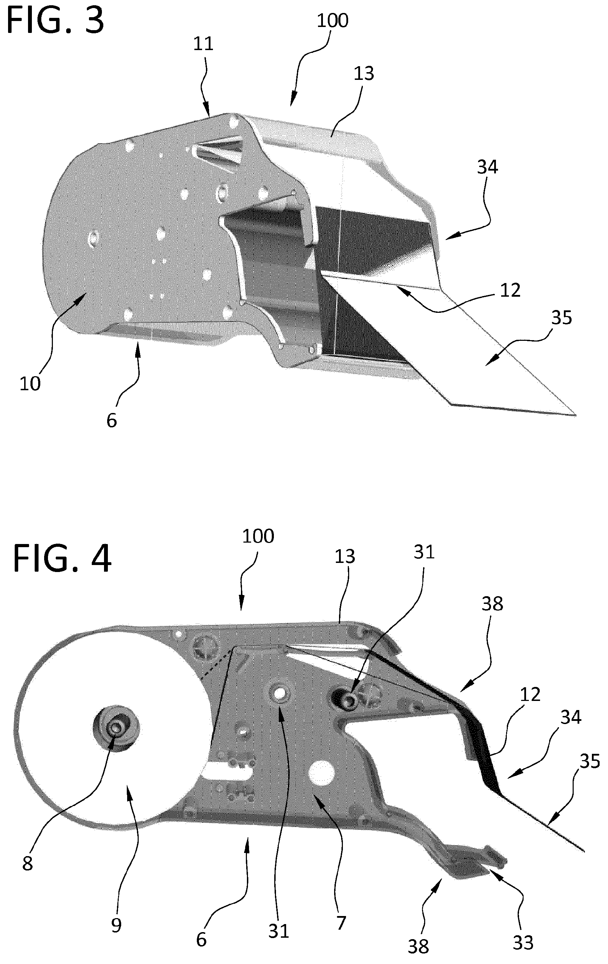

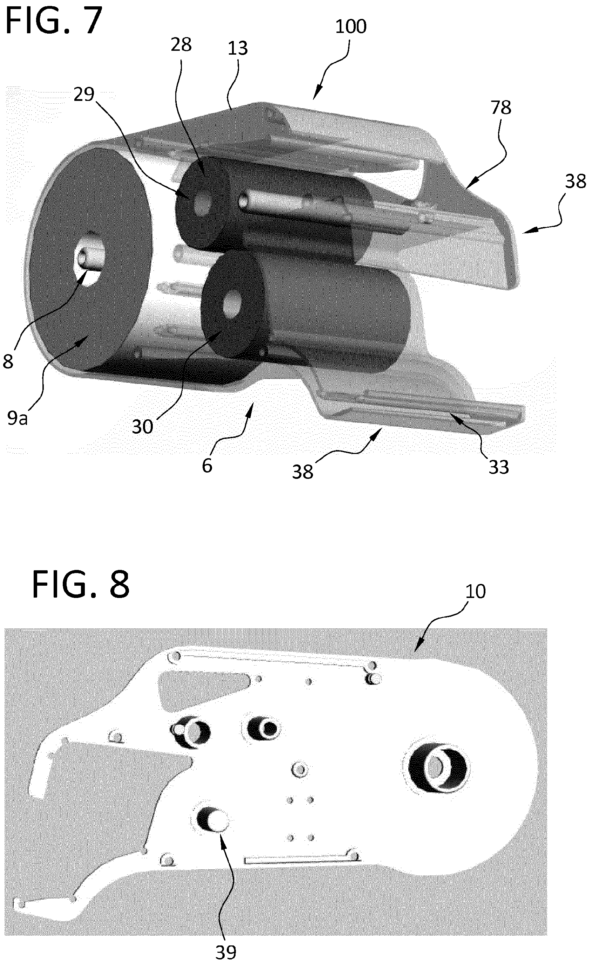

- Figure 8 shows the cover of the portion of Figure 3;

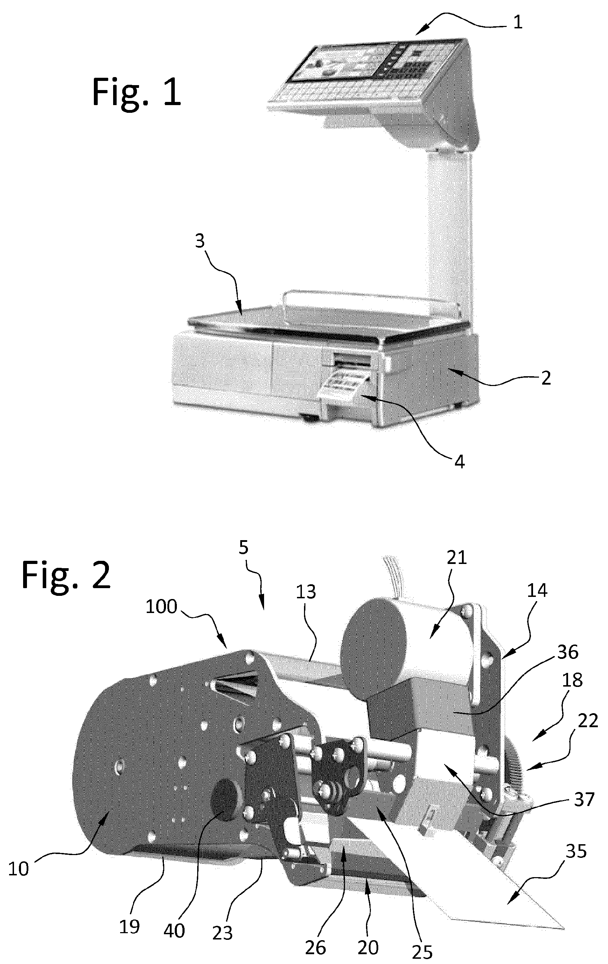

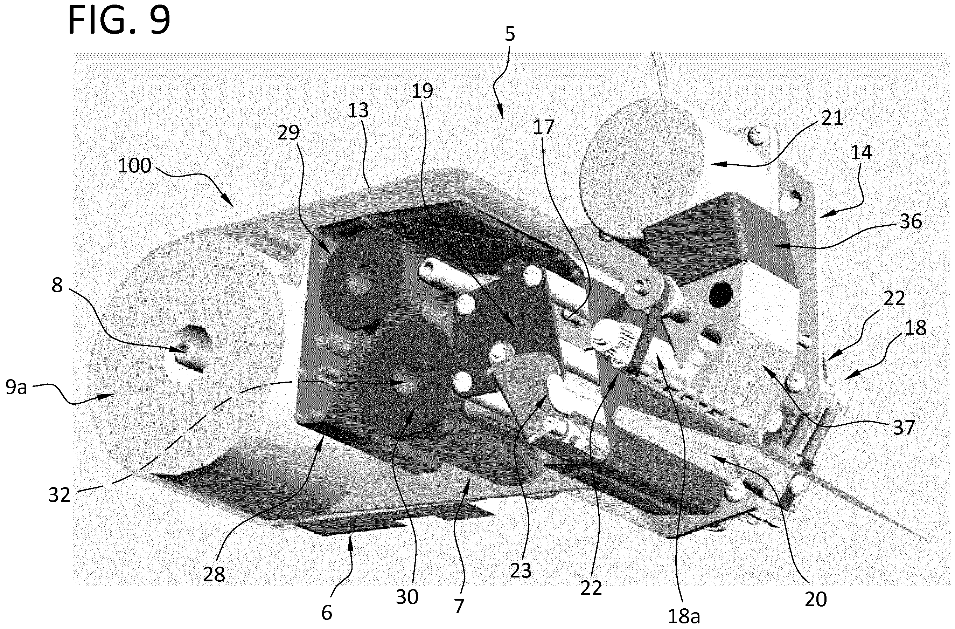

- Figure 9 shows a schematic perspective view, with some parts cut away for greater clarity, of an automatic labelling machine equipped with a printing cartridge according to invention. The numeral 1 in Figure 1 denotes in its entirety weighing-pricing scales which comprises a base frame 2 equipped with a weighing plate 3 and a movable lateral drawer 4 inside a compartment for changing a finished reel of printable paper with a new reel.

At the bottom of the above-mentioned compartment the scales 1 comprise an automatic labelling machine, or printer, made in the form of a compact module 5.

The labelling machine 5 is substantially of the known type and the description of it which follows is limited to the parts necessary for understanding the invention.

The labelling machine 5 is of the so-called "linerless" type and is preferably capable of printing both by indirect thermal transfer from a reel of "ribbon" to a printable support such as paper or film and on thermal paper (direct printing).

A cartridge 100 in accordance with this invention and illustrated in more detail in Figures 3, 4, 5, 6, 7 and 8 is inserted in the machine 5.

The cartridge 100 comprises a box-shaped body 6 defined, as better illustrated in Figures 3 to 8, by a first plate 7 for supporting at least a first pin 8 on which is mounted a reel 9, 9a of a ribbon 35 of printable paper and by at least a second plate 10, shown in Figure 8, which can be coupled to the first portion so as to define, for the reel 9, a container 11 having a first opening 12 for the escape of the ribbon 35 from which to obtain by cutting the printed labels to be applied to the products weighed.

In practice, the first plate 7 constitutes the base of the container 11 and is surrounded by a lateral wall 13 designed to delimit a chamber for housing the reel 9, whilst the second plate 10 constitutes an upper cover of the container 11.

The entire container 11, with its contents, constitutes an interchangeable portion in the machine 5, that is, constitutes, with its contents, the cartridge 100.

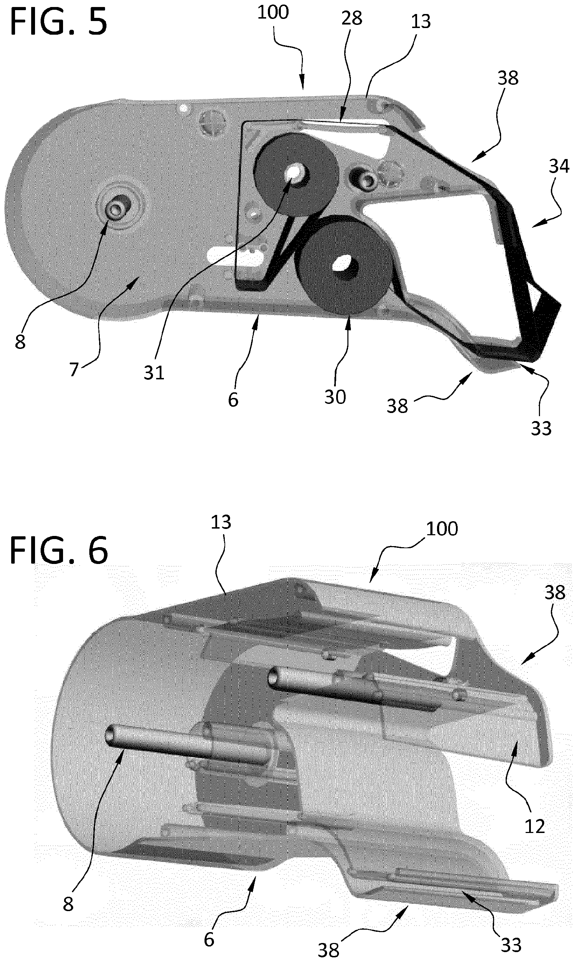

In a first embodiment illustrated in Figure 4, the cartridge 100 comprises the reel 9 of thermal paper (for direct thermal printing) which does not require a thermal transfer ribbon, which is present on the other hand, for example, in the solution illustrated in Figures 5 and 7, as explained in more detail below (indirect thermal printing).

The labelling machine 5 also comprises a third plate 14 positioned at the bottom of the above-mentioned compartment of the scales 1 and shown in Figures 2 and 9.

The plate 14 constitutes a fixed portion of the labelling machine 5 and comprises means for supporting the box-shaped body 6 of the cartridge 100, shaped in such a way as to allow the positioning and extraction and the locking/unlocking of the latter relative to the plate 14.

The supporting means preferably comprise two centring pins and two interlocking pins 17.

The labelling machine 5 also comprises motor means 18, comprising for example, a drive roller 18a, shaped in such a way as to allow the movement of the ribbon 35 of printable paper, printing means 19, for example a print head, and means 20 for cutting pieces of the ribbon 35 of printable paper to obtain the above-mentioned labels.

The motor means 18, the printing means 19 and the cutting means 20 are supported by the plate 14 and together with it constitute the mechanical elements of the above-mentioned automatic labelling machine.

As shown more clearly in Figure 9, the motor means 18 comprise a motor 21 and a transmission unit 22 with belts and gears.

The printing means 19 comprise a print head 23 and a print roller.

As shown more clearly in Figure 2, the cutting means 20 of the labelling machine 5 comprise a fixed blade 25 and a mobile blade 26, the latter driven by a movement unit 27 driven independently by the motor 21.

With particular reference to Figures 5, 7 and 9, in order to achieve on the ribbon 35 of adhesive-coated paper unwound from the reel 9 a thermal release of ink, the print head 23 acts on a printing ribbon 28, of substantially known type, which is also housed in the cartridge 100, that is to say, in the box-shaped body 6.

In this case, the reel 9a, not illustrated in Figure 5, is not of a thermal type but traditional.

As illustrated in Figure 5, the ribbon 28 is unwound from a reel 29 and the used part is re-wound on a recovery spool 30.

The reel 29 is mounted on a pin 31 of the first plate 7, whilst, in use, a motor-driven pin 32 which supports and rotates the recovery spool 30 extends from the plate 14 of the labelling machine 5 and passes through a through hole of the first plate 7.

As illustrated in Figures 2 and 8, the cartridge 100 comprises a pin 39, preferably coaxial with the pin 32 and positioned on the opposite side relative to the recovery spool 30.

The pin 39 is shaped to engage in the recovery spool 30 and allows the print ribbon 28 to be tensioned manually; as is known, in effect, the ribbon 28 may loosen relative to the optimum tension and make printing problematic.

Preferably, the cartridge 100 comprises a knob 40 for operating the pin 39, positioned outside the cartridge 100, preferably, as illustrated, located on the plate 10 and supported by it.

Advantageously, the knob 40 and the pin 39 allow the ribbon 28 to be tensioned also with the cartridge 100 mounted in the labelling machine 5.

The first opening 12 and a second opening 33 of the container 11 delimit the stretch in air of guide means 34 of the ribbon 28, which is conveyed inside the container 11 by two hollow arms 38 shaped in their entirety in the form of a C in such a way as to pass a stretch of ribbon 28 under the action of the printing means 19 when the cartridge 100 is inserted in the labelling machine 5.

The first opening 12 is thus an outlet opening of the ribbon 35 of the reel 9 and of the ribbon 28 of the reel 29 (if present), whilst the second opening 33 is an inlet opening of the used ribbon 28 for its rewinding about the recovery spool 30 (if present).

The labelling machine 5 lastly comprises a fan 36 for an easier expulsion of the labels and an attached air conveyor 37.

As is evident by the positioning of the pegs 16, of the pins 17, which are usual in prior art labelling machines 5, and by the C-shape of the hollow arms 38 of the cartridge 100, the box-shaped body 6 can be easily and advantageously removed by means of a simple vertical movement by the third plate 14, that is to say, by the mechanical elements of the above-mentioned automatic labelling machine.

In the cartridge 100 there may also be at least an RFID element for communicating, including at a distance, a state of consumption of the materials and/or an origin of the materials, quality and traceability for production batches.

In one embodiment, inside the cartridge 100 there is the reel of thermal paper, that is to say, the reel forms part of the cartridge 100 which is replaced as necessary.

In one embodiment, inside the cartridge 100 there is the reel of printable paper and the ribbon, forming part of the cartridge itself and which must be replaced when finished.

Advantageously, instead of replacing only the reels of paper whose respective ribbons should be laboriously repositioned in the labelling machine, according to this invention the cartridge including the reels are replaced which, thanks to suitable references in the printer, can be easily and quickly positioned.

It should be noted that, advantageously, the ribbons 9, 9a of printable paper (or other material) can be either adhesive, that is to say, designed to form adhesive labels, such as, for example in weighing-pricing scales, or without adhesive, if, for example, the corresponding automatic labelling machine is designed to print labels, regardless, as already mentioned, of the printing technology adopted.

## Claims

1. A printing cartridge comprising a box-shaped body (6) defined by a first plate (7) for supporting at least a first pin (8) on which is mounted a reel (9) of a ribbon (35) of printable paper and by at least a second plate (10) which can be coupled to the first portion so as to define, for the reel (9), a container (11) having at least a first opening (12);
the first plate (7) comprises a second support pin (31) of a second reel (29) of printing ribbon (28) and guide means (34) of the printing ribbon (28).

2. The printing cartridge according to claim 1, wherein the ribbon (35) of paper or the like is adhesive.

3. The printing cartridge according to claim 1 or 2, wherein the first reel (9) is of thermal paper.

4. The printing cartridge according to claim 1 or 2, comprising the second reel (29) of printing ribbon (28).

5. The printing cartridge according to claim 4, comprising a spool (30) for recovering the printing ribbon (28), the first plate (7) having a hole for a motor-driven pin (32) which supports and rotates the recovery spool (30).

6. The printing cartridge according to claim 5, comprising an idle pin (39), positioned on the opposite of the motor-driven pin with respect to the recovery spool (30), shaped to engage in the recovery spool (30) and allow the printing ribbon (28) to be tensioned manually.

7. The printing cartridge according to claim 6, comprising a knob (40) for operating the idle pin (39) located on the outside of the cartridge (100), preferably located on the second plate (10).

8. The printing cartridge according to any one of the preceding claims, wherein the container has a second opening (33), the first opening (12) and the second opening (33) delimiting a stretch in air of the means (34) for guiding the printing ribbon (28), the container (11) comprising two hollow arms (38), shaped in their entirety in the form of a C, by means of which the printing ribbon (28) is conveyed inside the container (11) in such a way as to pass a stretch of the printing ribbon (28) under the action of the printing means (19) when the cartridge is inserted in an automatic labelling machine (5), the first opening (12) defining an outlet opening for the paper ribbon (35) or the like of the first reel (9) and of the printing ribbon (28) and the second opening (33) defining an inlet opening of the used printing ribbon (28) for its re-winding around a recovery spool (30).

9. The cartridge according to any one of the preceding claims, comprising at least an RFID element for communicating, including at a distance, a state of consumption of the materials and/or an origin of the materials, quality and traceability for production batches.

10. An automatic labelling machine **characterised in that** it comprises a printing cartridge according to any one of claims 1 to 9, the labelling machine comprising a third plate (14) comprising means (15) for support of the box-shaped body (6) shaped in such a way as to allow the positioning and extraction and the locking/unlocking of the box-shaped body (6) relative to the third plate (14); the labelling machine comprising motor means (21) shaped in such a way as to allow a movement of the ribbon (35) of printable paper unwound from the reel (9), printing means (19) and cutting means (20) for pieces of the printable paper ribbon (35) to obtain printed labels.

11. The labelling machine according to claim 10, wherein the printing means (19) comprise a printing head (23) acting on the printing ribbon (28) for realising a heat release of ink from the printing ribbon (28) on the paper ribbon (35).

12. The labelling machine according to claim 10 or 11, wherein the box-shaped body (6) is de-insertable from the third plate (14).

13. Weighing-pricing scales comprising a base frame (2) equipped with a weighing plate (3) and a drawer (4) movable inside a compartment for changing used ribbon (9) of printable paper with a reel new, the scales being **characterised in that** they comprise an automatic labelling machine according to any one of claims 10 to 12, the third plate (14) being positioned at a bottom of the compartment.
